# EUROPEAN PATENT SPECIFICATION

(11) **EP 0 337 325 B1**
(45) Date of publication and mention of the grant of the patent: **13.09.1995**
(21) Application number: 89106204.4
(22) Date of filing: 07.04.1989
(51) Int. Cl.: G06T 7/00, G06T 5/40

(54) **Image processing method**
Bildverarbeitungsmethode
Méthode de traitement d'image

(30) Priority: 11.04.1988 JP 88484/88
(43) Date of publication of application: 18.10.1989
(73) Proprietor: YOZAN INC., Tokyo 155 (JP); SHARP KABUSHIKI KAISHA, Osaka 545 (JP)
(72) Inventor: Kumagai, Ryohei c/o Ezel Inc., Shinjuku-ku Tokyo 160 (JP)
(74) Representative: Grünecker, Kinkeldey, Stockmair & Schwanhäusser Anwaltssozietät

(56) References cited:
- US-A- 4 601 057
- PATENT ABSTRACTS OF JAPAN vol. 6, no. 148 (P-133)(1026), 7. August 1982
- PROCEEDINGS OF THE IEEE vol. 76, no.3, March 1988, pages 286, 287, New York, US; I. Dinstein et al.: "Computing Local Minima and Maxima of Digital Image Processing Systems Equipped with Hardware Comparators"

## Description

### FIELD OF THE INVENTION

The present invention relates to an image processing method, particularly to MODE METHOD, wherein a local minimum of histogram is calculated.

### BACKGROUND OF THE INVENTION

Mode method is well-known as an effective method for determining threshold in binarizing. In mode method, a local minimum is to be found between a couple of local maximums. For finding the local minimum, L³ times comparisons are necessary when the number of levels of the histogram is L. The comparison takes a lot of process time.

Threshold determination based on local minima is known for instance from US-A-4 601 057.

### SUMMARY OF THE INVENTION

Therefore, the present invention as defined in the appended claims has an object to provide an image processing method by which the threshold is calculated in much shorter process time than the conventional method.

According to the present invention, the density b which maximizes the following formula is found.$\text{(Na-Nb) x (Nc-Nb)}$
- a :: Density higher than b;
- c :: Density lower than b;
- Na:: Number of pixels of density a in a histogram;
- Nb:: Number of pixels of density b in a histogram;
- Nc:: Number of pixels of density c in a histogram.

The density a gives local maximum of higher density in the histogram and density c gives local maximum of lower density. The density b gives local minimum to be deemed to be the optional threshold. For finding the densities a, b and c, a table of density is generated first in the order of number of pixels of each density. The density of maximal number of pixels is assumed to be the density which gives one of the local maximum of higher or lower density; that is a or c. When it is assumed to be local maximum a of higher density, two densities are assumed to be densities b and c; b<=a and c<=b. The densities b and c are selected from densities of higher numbers of pixels, then gradually from densities of lower number of pixels. On each assumption and selection, (Na-Nb)x(Nc-Nb) is calculated. The densities a, b and c which give maximum value of (Na-Nb)x(Nc-Nb) are finally selected as the local maximums and the local minimum.

### BRIEF DESCRIPTION OF DRAWINGS

Fig. 1 shows a histogram of an image;
Fig. 2 shows a table corresponding to the histogram of Fig. 1;
Fig. 3 shows a table in the order of a number of pixels generated from the table in Fig. 2;
Fig. 4 shows a histogram to be flattened;
Fig. 5 shows a block diagram effective for the processing according to the present invention.

### PREFERRED EMBODIMENTS OF THE PRESENT INVENTION

Exemplary preferred embodiments of the image processing method according to the present invention will be described in detail hereinafter.

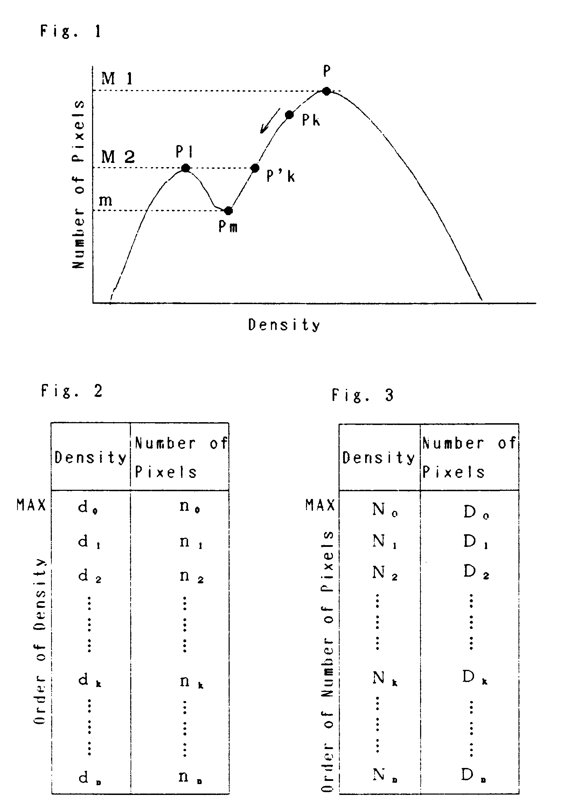

Fig. 1 shows a histogram of an image, wherein local maximums M1 and M2 and local minimum rather clearly appear. Usually, local maximum and local minimum are not so clear in practical image. So Fig. 1 is an example for description and easy understanding.

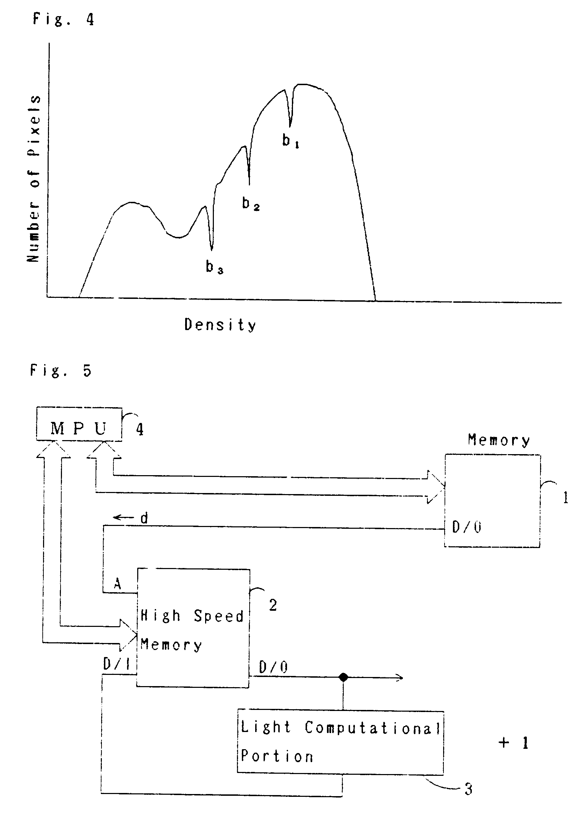

Fig. 2 shows a table of number of pixels according to the order of density, corresponding to the histogram in Fig. 1. The table of Fig. 2 is converted to the table of Fig. 3 according to the present invention. The table in Fig. 3 shows densities according to the order of number of pixels. The table of Fig. 3 is generated by sorting of the table of Fig. 2. The density of maximal number of pixels is the density giving one of local maximum. With respect to the histogram in Fig. 1, the density of maximal number of pixels is the density giving local maximum M1. Here, the density of maximal number of pixels is assumed to be the density giving the local maximum of higher density or lower density. The processing following to the assumption is determined according to which of the local maximum is assumed.
a) Processing when the density of maximal number of pixels is assumed to be the local maximum of higher density; N0 is assumed to be M1.
   In the table of Fig. 3, number of pixels are arranged from the maximum N0 to the minimum Nn, to which the densities D0, D1, ..., Dn correspond, respectively.
   From N0 to Nn, the maximal Nk is searched whose density Dk is lower than N0; D0>Dk. Nk is assumed now to be m. Then (N0-Nk) is calculated and registered. Next the maximal Nl is searched under the condition that Dk>D1 as well as Nk<Nl. Nl is assumed now to be M2. Then,$\text{Xkl=(N0-Nk)x(Nl-Nk)}$ is calculated and registered. Furthermore, the other D1′ is evaluated. The maximal Nl′ under the conditions that D1>D1′ as well as Nl<Nl′ is found so as to be assumed to be M2.
   The value of$\text{Xkl′=(N0-Nk)x(Nl′-Nk)}$ calculated and compared with Xkl.$\text{Xkl=(N0-Nk)x(Nl-Nk)}$ When Xkl′>=Xkl, Xkl′ is newly registered, substituting Xkl by Xkl′.
   Hereafter, Nl(n) is searched until the following relationship occurs.${\text{(N0-Nk)x(Nl}}^{\text{(n)}} {\text{-Nk)<(N0-Nk)x(Nl}}^{\text{(n+1)}} \text{-Nk)}$
   The maximal value of Xkl caused by Nl⁽ⁿ⁾ is finally registered.
   After the searching of Nl for one Nk, Nk is successively changed. nth Nk is defined as Nk⁽ⁿ⁾, the density thereof is defined as Dk⁽ⁿ⁾. Nk⁽ⁿ⁾ is selected under the condition that Dk⁽ⁿ⁻¹⁾>Dk⁽ⁿ⁾ as well as Nk⁽ⁿ⁻¹⁾>Nk⁽ⁿ⁾. For each Nk⁽ⁿ⁾, Nl⁽ⁿ⁾ is searched similar to the processing above.
   As shown in Fig. 1, when the assumption N0=M1 is correct, that is, the point P is the local maximum of higher density, the point Pk assumed to give Nk is moved gradually toward the point Pm which gives local minimum m. While the point Pl assumed to give Nl cannot be found until Pk reaches Pk′ with same altitude of Pl which gives M2, because there is no point with lower density as well as with higher number of pixels than that of Pk. Therefore, the calculation of Xkl is not executed so that the number of calculation times is economized.
b) Processing when the density of maximal number of pixels is assumed to be the local maximum of lower density. N0 is assumed to be M2.
   From N0 to Nn, the maximal Nk is searched whose density Dk is higher than N0; D0>Dk. Nk is assumed now to be m. Then (N0-Nk) is calculated and registered. Next the maximal Nl is searched under the condition that Dk<Dl as well as Nk<Nl. Nl is assumed now to be M2. Then,$\text{Xkl=(N0-Nk)x(Nl-Nk)}$ is calculated and registered. Furthermore, other Dl′ is evaluated. The maximal Nl′ under the conditions that Dl<Dl′ as well as Nl<Nl′ is found so as to be assumed to be M2. The value of$\text{Xkl′=(N0-Nk)x(Nl′-Nk)}$ is calculated and compared with Xkl.$\text{Xkl=(N0-Nk)x(Nl-Nk)}$ When Xkl′>=Xkl, Xkl′ is newly registered, substituting Xkl by Xkl′.
   Hereafter, Nl(n) is searched until the following relationship occurs.${\text{(N0-Nk)x(Nl}}^{\text{(n)}} {\text{-Nk)<(N0-Nk)x(Nl}}^{\text{(n+1)}} \text{-Nk)}$

The maximal value of Xkl is caused by Nl⁽ⁿ⁾ is finally registered.

After the searching of Nl for one Nk, Nk is successively changed. nth Nk is defined as Nk⁽ⁿ⁾, the density thereof is defined as Dk⁽ⁿ⁾. Nk⁽ⁿ⁾ is selected under the condition that Dk⁽ⁿ⁻¹⁾<Dk⁽ⁿ⁾ as well as Nk⁽ⁿ⁻¹⁾>Nk⁽ⁿ⁾. For each Nk⁽ⁿ⁾, Nl⁽ⁿ⁾ is searched similar to the processing above.

In the histogram of Fig. 1, the assumption of N0=M2 is incorrect. There is no point giving Nl under the condition that Nk<Nl as well as Dk<Dl. Therefore, the searching of Nk and Nl is rapidly executed without finding suitable Nk and Nl. So N0 is easily found not be be M2.

In the above searching, Nl is searched for each assumption of Nk. It is also possible to search Nk for each assumption of Nl, that is, a number of pixels in Fig. 2 is successively assumed to be Nk and Nl is searched for each assumption of Nk.

As for the searching direction, both of the directions from lower density to higher density and from higher density to lower density can be applied.

After the processing of a and b, the density giving Pm under the correct assumption.

In a practical image, there are usually spiky drops in a histogram as shown in Fig. 4. In Fig. 4, drops are represented by references b1, b2 and b3. Such drops causes incorrect local minimum. It is better to smooth the histogram before the processing of mode method according to the present invention.

Fig. 5 shows a block diagram effective for the processing according to the present invention.

In Fig. 5, a frame memory 1 is connected to an address input A of a high speed memory 2. The high speed memory 2 is provided with a feed back line from a data output D/O to a data input D/I through a light computational portion 3. An image to be processed is storaged in the frame memory 1 first. The density d of each pixel of the image is outputted from data output D/O of the memory 1 to the address input A of the high speed memory 2. The high speed memory 2 is initialized first and, data "0" is stored in each address.

When the density d is inputted, the high speed memory 2 outputs the data stored in the address designated by the density d. Outputted data is inputted to the light computational portion 3 and increased by "1" therein. The increased data is fed back to the data input D/I and stored again in the address of d. Since the data in the high speed memory 2 is increased by "1" on each input of d, the number of pixels of each density d is counted up and stored in the address d of the high speed memory 2. Then a histogram is generated.

The memory 2 comprises for example a static RAM (random access memory) which performs reading and writing in high speed. So it is possible to increase the data in the high speed memory 2 synchronously with each output from the frame memory 1. The histogram is generated within one scanning of the image. When a static RAM of process speed of about 40nsec/pixel is used an image size of 512x512 pixels can be processed in about 1/60 sec; in a video rate. For the high speed processing, the frame memory 1 should be of high process speed. As a high speed frame memory, a serial accessible memory such as dual-port memory is applicable.

When histogram generating is completed, the data in the high speed memory 2 is read by MPU 4. MPU 4 designates address of the frame memory 1 with the number of pixels stored in the high speed memory 2 and writes the density d (address of the high speed memory) in corresponding address of the frame memory 1. The data in the frame memory can be deemed to be the table in Fig. 3, when data is reviewed according to the order of address.

There is a possibility that different densities has the same number of pixels. Such problem may be easily solved by managing the overlapping of number of pixels.

Although only a few exemplary embodiments of this invention have been described in detail above, those skilled in the art will readily appreciate that many modifications are possible in the exemplary embodiments without materially departing from the novel teachings and advantages of this invention.

Accordingly, all such modifications are intended to be included within the scope of this invention as defined in the following claims.

## Claims

1. Image processing method for determining a threshold value of a density distribution of a pixelwise stored image, said density distribution being defined by the numbers N_{O}-N_{N} of pixels of respective density-values D_{O}-D_{N} occuring in the image, said determination being achieved by selecting a local minimum within the histogram
**CHARACTERIZED IN THAT**
said selecting comprises the following steps A-D, whereby step B and C can be interchanged with each other:
A) Generating a density table arranged from the maximum number of pixels N₀ to the minimum N_{N} according to the numbers N₀-N_{N} of pixels of respective densities D₀-D_{N};
B) starting with density D₀ having the highest number of pixels N₀ and searching for the next density D_{K1} in the table, which fulfills the following conditions:${\text{D}}_{\text{K1}} {\text{< D}}_{\text{O}} {\text{^ N}}_{\text{K1}} {\text{< N}}_{\text{O}}$ and storing said D_{K1},
searching a density D_{L1} fulfilling the following conditions:${\text{D}}_{\text{L1}} {\text{< D}}_{\text{K1}} {\text{^ N}}_{\text{L1}} {\text{> N}}_{\text{K1}}$ variating D_{K1} until a D_{L1} is found fulfilling condition (2); if no D_{L1} can be found continuing with the next step; if a D_{L1} was found storing said D_{L1} and variating DK1 until${\text{X}}_{\text{KL1}} {\text{= (N}}_{\text{O}} {\text{- N}}_{\text{K1}} {\text{) x (N}}_{\text{L1}} {\text{-N}}_{\text{K1}} \text{)}$ reaches a maximal value; storing said maximal value X_{KL1} and considering the respective density D_{K1} as being the local mimimum;
C) starting with density D₀ having the highest number of pixels N₀ and searching for the next density D_{K2} in the table, which fulfills the following conditions:${\text{D}}_{\text{K2}} {\text{> D}}_{\text{O}} {\text{^ N}}_{\text{K2}} {\text{< N}}_{\text{O}}$ and storing said D_{K2};
searching a density D_{L2} fulfilling the following conditions:${\text{D}}_{\text{L2}} {\text{> D}}_{\text{K2}} {\text{^ N}}_{\text{L2}} {\text{> N}}_{\text{K2}}$ variating D_{K2} until a D_{L2}is found fulfilling condition (5); if no D_{L2} can be found continuing with the next step; if a D_{L2} was found storing said D_{L2} and variating D_{K2} until${\text{X}}_{\text{L2}} {\text{= (N}}_{\text{O}} {\text{- N}}_{\text{K2}} {\text{) x (N}}_{\text{L2}} {\text{-N}}_{\text{K2}} \text{)}$ reaches a maximal value; storing said maximal value X_{KL2} and considering the respective density D_{K2} as being the local mimimum;
D) if a local minimum D_{K(1,2)} is found, considering D_{K(1,2)} as said threshold value; if more than one local minimum was found considering that D_{K(1,2)} to be the true threshold value which is related bigger X_{KL(1,2)} value.

2. A method according to claim 1
**CHARACTERIZED IN THAT**
before step A is executed generating a density distribution histogram out of the density values D₀-D_{N} and their respective numbers N₀-N_{N}, flattening said histogram and using the flattened values for generating the table of density according to step A.

## Patentansprüche

1. Bildverarbeitungsverfahren zum Bestimmen eines Schwellwerts einer Dichteverteilung bei einem pixelsweise gespeicherten Bild, wobei die Dichteverteilung durch die Anzahlen N_{O} bis N_{N} von Pixeln mit entsprechenden Dichtewerten D_{O} bis D_{N}, die in dem Bild auftreten, definiert ist, wobei die Bestimmung durch Wählen eines lokalen Minimums innerhalb des Histogramms erreicht wird, **dadurch gekennzeichnet**, daß das Auswählen die folgenden Schritte A bis D umfaßt, wobei Schritt B und C miteinander vertauscht werden können:
A) Erzeugen einer Dichtetabelle entsprechend den Anzahlen N_{O} bis N_{N} der Dichten D_{O} bis D_{D} in Reihenfolge von der größten Pixelanzahl N₀ zur geringsten Pixelanzahl N_{N};
B) Beginnen mit der Dichte D₀, die die größte Anzahl von Pixeln N₀ aufweist und Suchen der nächsten Dichte D_{K1} in der Tabelle, durch die folgende Bedingungen erfüllt werden:${\text{D}}_{\text{K1}} {\text{< D}}_{\text{O}} {\text{^ N}}_{\text{K1}} {\text{< N}}_{\text{O}}$ und Speichern von D_{K1};
Suchen einer Dichte D_{L1}, die folgende Bedingungen erfüllt:${\text{D}}_{\text{L1}} {\text{< D}}_{\text{K1}} {\text{^ N}}_{\text{L1}} {\text{> N}}_{\text{K1}}$ Variieren von D_{K1} bis ein D_{L1} gefunden wird, welches die Bedingung (2) erfüllt; falls kein D_{L1} gefunden werden kann, Fortfahren mit dem nächsten Schritt; falls ein D_{L1} gefunden wurde, Speichern von D_{L1} und Variieren von D_{K1} bis${\text{X}}_{\text{KL1}} {\text{= (N₀ - N}}_{\text{K1}} {\text{) x (N}}_{\text{L1}} {\text{- N}}_{\text{K1}} \text{)}$ einen maximalen Wert erreicht; Speichern des maximalen Wertes X_{KL1} und Betrachten der entsprechenden Dichte D_{K1} als lokales Minimum;
C) Beginnen mit der Dichte D_{O}, die die höchste Anzahl von Pixel N_{O} hat und Suchen der nächsten Dichte D_{K2} in der Tabelle, welche folgende Bedingungen erfüllt:${\text{D}}_{\text{K2}} {\text{> D}}_{\text{O}} {\text{^ N}}_{\text{K2}} {\text{< N}}_{\text{O}}$ und Speichern von D_{K2};
Suchen einer Dichte D_{L2} die die folgende Bedingung erfüllt:${\text{D}}_{\text{L2}} {\text{> D}}_{\text{K2}} {\text{^ N}}_{\text{L2}} {\text{> N}}_{\text{K2}}$ Variieren von D_{K2} bis ein D_{L2} gefunden wird, welches die Bedingung (5) erfüllt; falls kein D_{L2} gefunden werden kann, Fortfahren mit dem nächsten Schritt; falls ein D_{L2} gefunden wurde, Speichern dieses D_{L2} und Variieren von D_{K2} bis${\text{X}}_{\text{L2}} {\text{= (N}}_{\text{O}} {\text{- N}}_{\text{K2}} {\text{) x (N}}_{\text{L2}} {\text{- N}}_{\text{K2}} \text{)}$ einen maximalen Wert erreicht; Speichern des maximalen Wertes X_{KL2} und Betrachten der entsprechenden Dichte D_{K2} als lokales Minimum;
D) falls ein lokales Minimum D_{K(1,2)} gefunden wurde, betrachten von D_{K(1,2)} als Schwellwert; falls mehr als ein lokales Minimum gefunden wurde, betrachten desjenigen D_{K(1,2)} als den echten Schwellwert, welcher den größeren X_{KL(1,2)}-Wert aufweist.

2. Verfahren nach Anspruch 1, **dadurch gekennzeichnet**, daß vor Ausführung des Schrittes A ein Dichteverteilungshistogramm aus den Dichtewerten D₀-D_{N} und den entsprechenden Anzahlen N₀-N_{N} erzeugt wird, daß das Histogramm geglättet wird und daß die geglätteten Werte für die Erzeugung der Dichtetabelle gemäß Schritt A verwendet werden.

## Revendications

1. Procédé de traitement d'image pour déterminer une valeur de seuil d'une distribution de densités d'une image stockée selon les pixels, ladite distribution de densités étant définie par les nombres N₀-N_{N} de pixels de valeurs de densité respectives D_{O}-D_{N} observées dans l'image, ladite détermination étant réalisée en sélectionnant un minimum local dans l'histogramme,
caractérisé en ce que :
ladite sélection comprend les étapes suivantes A à D, les étapes B et C pouvant être interchangées l'une avec l'autre :
A) génération d'une table de densités agencée depuis le nombre maximum de pixels N_{O} jusqu'au nombre minimum de pixels N_{N} conformément aux nombres N_{O}-N_{N} de pixels de densités respectives D_{O}-D_{N} ;
B) démarrage avec la densité D_{O} présentant le nombre le plus élevé de pixels N_{O} et recherche de la densité suivante D_{K1} dans la table, laquelle satisfait les conditions suivantes :${\text{D}}_{\text{K1}} {\text{< D}}_{\text{O}} {\text{Λ N}}_{\text{K1}} {\text{< N}}_{\text{O}}$ et stockage de ladite D_{K1} ;
recherche d'une densité D_{L1} qui satisfait les conditions suivantes :${\text{D}}_{\text{L1}} {\text{< D}}_{\text{K1}} {\text{Λ N}}_{\text{L1}} {\text{> N}}_{\text{K1}}$ variation de D_{K1} jusqu'à ce qu'un D_{L1} qui satisfasse la condition (2) soit trouvé ; si aucun D_{L1} ne peut être trouvé, poursuivre avec l'étape suivante ; si un D_{L1} a été trouvé, stockage dudit D_{L1} et variation de D_{K1} jusqu'à ce que :${\text{X}}_{\text{KL1}} {\text{= (N}}_{\text{O}} {\text{- N}}_{\text{K1}} {\text{) x (N}}_{\text{L1}} {\text{- N}}_{\text{K1}} \text{)}$ atteigne une valeur maximum ; stockage de ladite valeur maximum X_{KL1} et considération de la densité respective D_{K1} comme étant le minimum local ;
C) démarrage avec la densité D_{O} présentant le nombre le plus élevé de pixels N_{O} et recherche de la densité suivante D_{K2} dans la table, qui satisfasse les conditions suivantes :${\text{D}}_{\text{K2}} {\text{> D}}_{\text{O}} {\text{Λ N}}_{\text{K2}} {\text{< N}}_{\text{O}}$ et stockage de ladite D_{K2} ;
recherche d'une densité D_{L2} qui satisfasse les conditions suivantes :${\text{D}}_{\text{L2}} {\text{> D}}_{\text{K2}} {\text{Λ N}}_{\text{L2}} {\text{> N}}_{\text{K2}}$ variation de D_{K2} jusqu'à ce qu'une D_{L2} qui satisfasse la condition (5) soit trouvée ; si aucune D_{L2} ne peut être trouvée, poursuivre avec l'étape suivante ; si une D_{L2} est trouvée, stockage de ladite D_{L2} et variation de D_{K2} jusqu'à ce que :${\text{X}}_{\text{L2}} {\text{= (N}}_{\text{O}} {\text{- N}}_{\text{K2}} {\text{) x (N}}_{\text{L2}} {\text{- N}}_{\text{K2}} \text{)}$ atteigne la valeur maximum ; stockage de ladite valeur maximum X_{KL2} et considération de la densité respective D_{K2} comme étant le minimum local ;
D) si un minimum local D_{K(1,2)} est trouvé, considération de D_{K(1,2)} en tant que dite valeur de seuil ; si plus d'un minimum local est trouvé, considération de D_{K(1,2)} comme étant la valeur de seuil vraie qui est rapportée à la valeur plus importante X_{KL(1,2)}.

2. Procédé selon la revendication 1, caractérisé par, avant que l'étape A ne soit exécutée, la génération d'un histogramme de distribution de densités à partir des valeurs de densité D_{O}-D_{N} et de leurs nombres respectifs N_{O}-N_{N}, aplanissement dudit histogramme et utilisation des valeurs aplanies pour générer la table de densités conformément à l'étape A.
